# EUROPEAN PATENT APPLICATION

(11) **EP 4 431 678 A1**
(43) Date of publication of application: **18.09.2024**
(21) Application number: 23745370.9
(22) Date of filing: 03.04.2023
(51) Int. Cl.: E04H 4/16, E02B 15/10

(54) **POOL CLEANING SYSTEM**

(30) Priority: 02.02.2023 CN 202320103208 U
(71) Applicant: Xingmai Innovation Technology (Suzhou) Co., Ltd., Suzhou, Jiangsu 215000 (CN)
(72) Inventor: ZHANG, Shilei, Suzhou, Jiangsu 215000 (CN)
(74) Representative: Casalonga
(86) International application number: PCT/CN2023/086047
(87) International publication number: WO 2024/159618

(57) **Abstract**

Some embodiments of the present invention provide a pool cleaning system. The pool cleaning system includes a pool cleaning robot, a power supply mechanism, and a water surface cleaning mechanism. The pool cleaning robot can clean at least one of a bottom surface, wall surfaces, a water surface of a pool. The power supply mechanism is electrically connected with the pool cleaning robot. The water surface cleaning mechanism is electrically connected with the power supply mechanism and is disposed on the power supply mechanism. When the pool cleaning robot is in a working state, the power supply mechanism is capable of floating on the water surface, and the water surface cleaning mechanism is capable of being configured to recycle garbage floating on the water surface, so that the garbage on the water surface can be recycled by using the water surface cleaning mechanism when the bottom surface or the wall surfaces are cleaned by the pool cleaning robot, which is beneficial to improving the cleaning efficiency. Meanwhile, the user does not need to purchase a robot for cleaning the water surface to operate independently, which is beneficial to reducing the pool cleaning cost of the user.

## Description

### Technical Field

The present invention relates to the technical field of pool cleaning robots, and in particular, to a pool cleaning system.

### Background

At present, there are two types of pool cleaning robots. One is dedicated to cleaning a bottom and vertical wall surfaces of a pool, and the other is dedicated to cleaning a water surface of the pool. Therefore, if a user wants to clean a bottom surface, the wall surfaces, and the water surface of the pool automatically, it is necessary to prepare two pool cleaning robots to clean respectively, which results in high cost and low cleaning efficiency.

### Summary

Some embodiments of the present invention adopt the following technical solutions:
A pool cleaning system includes:
a pool cleaning robot, configured to clean at least one of a bottom surface, wall surfaces, a water surface of a pool;
a power supply mechanism, electrically connected with the pool cleaning robot; and
a water surface cleaning mechanism, electrically connected with the power supply mechanism and disposed on the power supply mechanism. In a case that the pool cleaning robot is in a working state, the power supply mechanism is floated on the water surface, and the water surface cleaning mechanism is being configured to recycle garbage floating on the water surface.

As an optional solution, the power supply mechanism includes:
a mounting rack, capable of floating on the water surface; and
a battery module, disposed in the mounting rack, and the mounting rack being disposed in a sealing manner.

As an optional solution, the mounting rack is of a shell structure. The battery module is disposed in the shell structure.

As an optional solution, the mounting rack includes:
a body, the battery module being disposed in the body; and
buoyancy assembly, connected with the body, and the buoyancy assembly being configured to adjust the buoyancy of the body.

As an optional solution, the water surface cleaning mechanism includes:
a recycling basket, disposed on the power supply mechanism. The recycling basket is provided with an inlet. When the recycling basket is in a working state, the inlet is located on the water surface.

As an optional solution, in a front-rear direction, a side wall in front of the recycling basket and the power supply mechanism are disposed at an interval to form the inlet, and a side wall behind the recycling basket is connected with the power supply mechanism. The front-rear direction is a movement direction of the pool cleaning robot during working.

As an optional solution, the water surface cleaning mechanism further includes:
a driving member, electrically connected with the power supply mechanism; and
a recycling member, connected with an output end of the driving member. The recycling member is rotatably disposed on the inlet of the recycling basket along an output direction of the driving member. When the driving member drives the recycling member to rotate, the recycling member recycles the garbage on the water surface back into the recycling basket.

As an optional solution, when the pool cleaning robot is in the working state, the recycling member is at least partially located above the water surface.

As an optional solution, the power supply mechanism includes a mounting rack. The mounting rack includes:
a body; and
a blocking plate, connected with the body in a left-right direction, and the blocking plate extending to the direction of the recycling basket from the body and blocking a preset height of the recycling member in front of the recycling member. The left-right direction is a direction perpendicular to the movement direction when the pool cleaning robot works.

As an optional solution, when the pool cleaning robot is in the working state, one end, far away from the body, of the blocking plate is located above the water surface.

As an optional solution, the recycling basket is located below the power supply mechanism, and the recycling basket includes a front side plate and a rear side plate; wherein the front side plate and the rear side plate disposed opposite to each other, a top surface of the front side plate is spaced apart from the power supply mechanism, at least a portion of the inlet is disposed between the front side plate and the power supply mechanism, and a top surface of the rear side plate is connected with the power supply mechanism.

As an optional solution, the power supply mechanism includes a mounting rack, the mounting rack includes:
a body, the recycling member is disposed on the body, the recycling member extending along a length direction of the body;
a blocking plate, disposed on the body, wherein the blocking plate extends from the body to the side of the recycling member in a direction close to the recycling basket, so that the blocking plate blocks a part of the recycling member in a horizontal direction.

As an optional solution, the buoyancy assemblies extend in an up-and-down direction, a number of the buoyancy assemblies at least two, and at least two of the buoyancy assemblies are evenly spaced in a circumferential direction of the body.

As an optional solution, the water surface cleaning mechanism includes:
a recycling basket, disposed below the power supply mechanism, wherein at least two of the buoyancy assemblies are disposed around the recycling basket, and the recycling basket is provided with an inlet; when the pool cleaning robot is in a working state, the inlet is located on the water surface.

As an optional solution, the number of the buoyancy assemblies is two, the two buoyancy assemblies are respectively disposed at two opposite ends of the body along a left-right direction, and at least part of the inlet is located between the two buoyancy assemblies.

### Brief Description of the Drawings

To describe the technical solutions in the embodiments of the present invention more clearly, the following briefly describes the accompanying drawings required for describing the embodiments of the present invention. Apparently, the accompanying drawings in the following description show merely some embodiments of the present invention, and those of ordinary skill in the art may also obtain other drawings from these accompanying drawings without creative efforts according to the content of the embodiments of the present invention and these accompanying drawings.
Fig. 1 illustrates a schematic structural diagram of a pool cleaning system provided by an embodiment of the present invention.
Fig. 2 illustrates a schematic structural diagram of a power supply mechanism and a water surface cleaning mechanism provided by an embodiment of the present invention.
Fig. 3 illustrates a schematic structural diagram of a cross section of a power supply mechanism and a water surface cleaning mechanism provided by an embodiment of the present invention.

Reference signs in the drawings are as follows:
100-Pool cleaning robot;
200-Power supply mechanism; 210-Mounting rack; 211-Body; 212-Buoyancy assembly; 213-Blocking plate; 220-Battery module;
300-Water surface cleaning mechanism; 310-Recycling basket; 311-Inlet; 320-Driving member; and 330-Recycling member.

### Detailed Description of the Embodiments

The present invention will be further described in detail below with reference to the accompanying drawings and embodiments. It is to be understood that specific embodiments described herein are merely used for explaining the present invention and are not intended to limit the present invention. In addition, it is also to be noted that, in order to facilitate description, only part rather than all structures related to the present utility mode are shown in the accompanying drawings.

In the description of the present invention, unless otherwise definitely specified and limited, terms "mutually connect", "connect", and "fix" are to be broadly understood. For example, the terms may refer to fixed connection, or may also refer to detachable connection or integration. The terms may refer to mechanical connection and may also refer to electrical connection. The terms may refer to direct mutual connection, may also refer to indirect connection through a medium, or may refer to communication of structures in two elements or an interaction relationship of the two elements. Those of ordinary skill in the art may understand specific meanings of the abovementioned terms in the present invention in specific cases.

In the present invention, unless otherwise explicitly specified and defined, a first feature "above" or "below" of a second feature may include that the first feature is in direct contact the second features, or may include that the first and second features are not in direct contact, but in contact through other features therebetween. In addition, the first feature "above", "over", and "on" the second feature, includes that the first feature is directly above and obliquely above the second feature, or only means that the horizontal height of the first feature is higher than that of the second feature. The first feature "under", "below", and "underneath" the second feature includes that the first feature is directly below and obliquely below the second feature, or only means that the horizontal height of the first feature is lower than that of the second feature.

In the descriptions of the present invention, it is to be noted that orientations or positional relationships indicated by the terms "upper", "lower", "left", and "right" are orientations or positional relationships shown based on the accompanying drawings, and are merely for the convenience of describing the present invention and simplifying the description, rather than indicating or implying that the devices or elements must have a particular orientation, and constructed and operated in the particular orientation. Thus, it cannot be construed as a limitation to the present invention. In addition, terms "first" and "second" are merely used for distinguishing between descriptions and do not have special meaning.

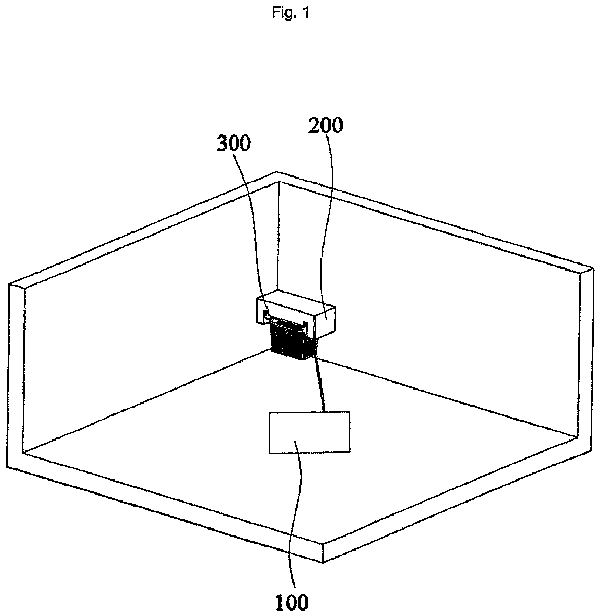

As shown in Fig. 1, this embodiment provides a pool cleaning system. The pool cleaning system includes a pool cleaning robot 100. The pool cleaning robot 100 can clean at least one of a bottom surface, wall surfaces, a water surface of a pool. In addition, the pool cleaning system further includes a power supply mechanism 200 electrically connected with the pool cleaning robot 100. The power supply mechanism 200 is disposed to provide a power source for the pool cleaning robot 100. Since the pool cleaning robot 100 works in water, the waterproof requirements on the overall machine and the power supply mechanism 200 are very high. In order to prevent the power supply mechanism 200 from short circuit in water, when the pool cleaning robot 100 works, the power supply mechanism 200 floats on the water surface, so that the waterproof difficulty of the power supply mechanism 200 can be reduced. Specifically speaking, the pool cleaning robot 100 is connected with the power supply mechanism 200 through a cable. Of course, the power supply mechanism 200 floats on the water surface, which has a small limitation on battery volume. A large volume of battery can be used, which is beneficial to increasing the battery life of the battery mechanism 200.

In addition, the pool cleaning mechanism further includes a water surface cleaning mechanism 300. The water surface cleaning mechanism 300 is electrically connected with the power supply mechanism 200 and is disposed on the power supply mechanism 200. When the pool cleaning robot 100 is in a working state, the power supply mechanism 200 is capable of floating on the water surface, and the water surface cleaning mechanism 300 is capable of being disposed to recycle garbage floating on the water surface, so that the garbage on the water surface can be recycled by using the water surface cleaning mechanism 300 when the bottom surface or the wall surfaces are cleaned by the pool cleaning robot 100, which is beneficial to improving the cleaning efficiency. Meanwhile, the user does not need to purchase a robot for cleaning the water surface to operate independently, which is beneficial to reducing the pool cleaning cost of the user.

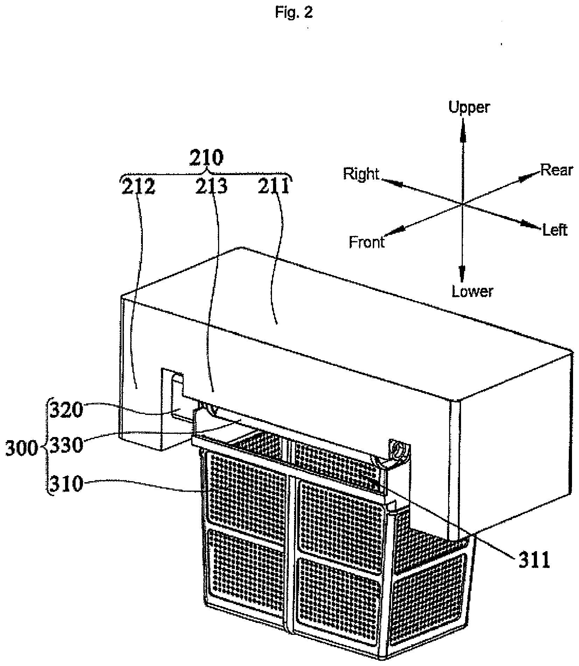

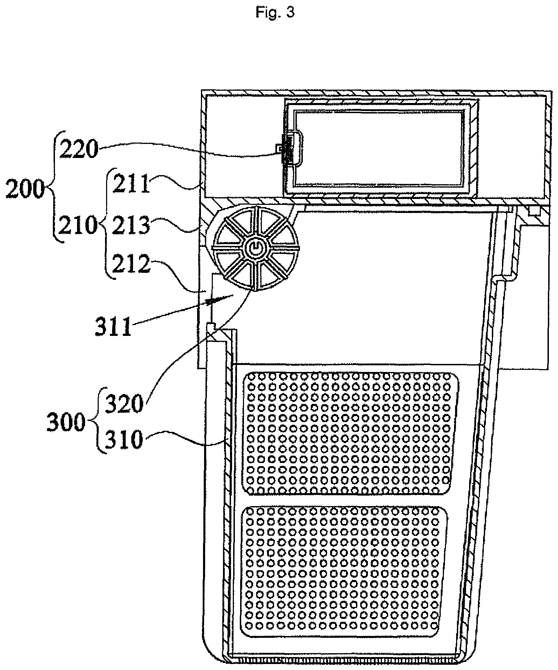

Now, detailed structures of the power supply mechanism 200 are described in combination with Fig. 2 and Fig. 3.

As shown in Fig. 2 and Fig. 3, the power supply mechanism 200 includes a mounting rack 210 and a battery module 220. The mounting rack 210 floats on the water surface, and the mounting rack is disposed in a sealing manner. The battery module 220 is disposed in the mounting rack 210, so as to prevent the battery module 220 from short circuit in water. Specifically speaking, the battery module 220 in this embodiment is a battery module 220 capable of being charged repeatedly, which is beneficial to reducing the cost. Exemplarily, the battery module 220 is a portable battery such as a lithium battery, a lead acid battery, and a hydrogen energy battery. The battery module 220 in this embodiment is a lithium battery. The lithium battery has the advantages of small volume, high energy, light weight, and the like.

The mounting rack 210 is of a hollow shell structure. The battery module 220 is disposed in the shell. Since the battery module 220 has certain weight, in order to make the battery module float on the water surface, the weight can be reduced and the drainage volume can be increased by using the shell structure of the mounting rack 210, so as to increase the buoyancy, thereby preventing the battery module 220 from entering water or sinking.

Further, the mounting rack 210 includes a body 211 and a buoyancy assembly 212. The body 211 is mounted to the battery module 220, and the buoyancy assembly 212 is used for adjusting the buoyancy of the body 211. The buoyancy assembly can increase the volume of the mounting rack 210 and increase the buoyancy.

Exemplarily, there are at least two buoyancy assemblies 212 in this example. The at least two buoyancy assemblies 212 are respectively connected with two sides of the body 211 in a left-right direction, and extend in an up-down direction, so as to increase the volume of the mounting rack 210 and improve the buoyancy. The left-right direction is the direction perpendicular to the movement direction when the pool cleaning robot 100 works. Meanwhile, since the pool cleaning robot 100 will drive the power supply mechanism 200 to move accordingly when moving in the water, the requirement on the balance of the mounting rack 210 is high. The two buoyancy assemblies 212 are symmetrically disposed, which is beneficial to balancing the weight on both sides of the body 211 and is beneficial to preventing the mounting rack 210 from tilting or rotating at a large angle. Therefore, the stability of the power supply mechanism 200 on the water surface is improved, so that the power supply mechanism 200 and the pool cleaning robot 100 are kept in a relatively consistent movement direction, thereby facilitating recycling garbage by the water surface cleaning mechanism.

Optionally, the body 211 and the two buoyancy assemblies 212 are of an integrated structure, which is beneficial to reducing the production cost, and improving the assembly and maintenance efficiency.

The buoyancy assembly 212 is of a shell structure, which is beneficial to ensuring to increase the buoyancy with relatively small weight. Of course, the buoyancy assembly 212 is also be a material, such as foam, with low density and light weight, which is beneficial to ensuring to increase the buoyancy, and has low little impact on the overall weight of the mounting rack 210.

Now, detailed structures of the water surface cleaning mechanism 300 are described in combination with Fig. 2 and Fig. 3.

As shown in Fig. 2 and Fig. 3, the water surface cleaning mechanism 300 includes a recycling basket 310. The recycling basket 310 is disposed on the power supply mechanism 200. The recycling basket 310 is provided with an inlet 311. The inlet 311 is located on the water surface, so that the pool cleaning robot 100 drives the mounting rack 210 to move, the recycling basket 310 moves along with it, and recycles garbage during movement, so that the garbage enters from the inlet 311. It can be understood that the recycling basket 310 has a plurality of water holes, so as to facilitate formation of a filtering structure. The garbage entering the recycling basket 310 is filtered in the recycling basket 310, and water is drained from the water holes. Exemplarily, the recycling basket 310 is made of a plastic or metal material and is in a box or basket shape, or also be a string bag structure, which is not specifically limited in this embodiment

In order to make the garbage enter the recycling basket from the inlet 311 more easily, in a front-rear direction, a side wall in front of the recycling basket 310 and the power supply mechanism 200 are disposed at an interval to form the inlet 311, and a side wall behind the recycling basket 310 is connected with the power supply mechanism 200; and the front-rear direction is the movement direction of the pool cleaning robot 100, so as to facilitate recycling of the garbage.

Further, the water surface cleaning mechanism 300 further includes a driving member 320 and a recycling member 330. The driving member 320 is electrically connected with the power supply mechanism 200. The recycling member 330 is connected with an output end of the driving member 320. The driving member 320 is rotatably disposed on the inlet 311 of the recycling basket 310 in an output direction of the driving member 320. When the driving member 320 can drive the recycling member 330 to rotate, the recycling member 330 recycles the garbage on the water surface into the recycling basket 310, so that the water surface cleaning mechanism 300 has the capacity of actively recycling the garbage, which is beneficial to improving a cleaning effect. It is understood that the recycling member 330 is of a rolling brush structure, which can bring the garbage into the inlet 311 during rotating. Of course, a rotation direction of the recycling member 330 is a direction toward the inlet 311.

Part of the recycling member 330 is located on the water surface, so that the recycling member 330 can bring the garbage floating on the water surface into the inlet 311 during rotating, so as to ensure a cleaning effect.

In addition, in order to prevent part of the recycling member 330 located on the water surface from pushing the garbage away to reduce the recycling efficiency during rotating of the recycling member 330, in this embodiment, the mounting rack 210 further includes a blocking plate 213. The blocking plate 213 is connected with the body 211 in a left-right direction, and the blocking plate 213 extends in the direction of the recycling basket 310, and blocks a preset height of the recycling member 330 in front of the recycling member 330, so as to block the part, breaking the water surface, of the recycling member 330. Meanwhile, the buoyancy assemblies 212 on both sides are obstructed on the left side and the right side, so that the garbage entering between the two buoyancy assemblies 212 is recycled more easily, which is beneficial to improving the recycling efficiency.

Furthermore, one end, far away from the body 211, of the blocking plate 213 is located above the water surface. Under the blocking of the blocking plate 213, so that space that can accommodate the garbage can be formed among the blocking plate 213 and the buoyancy assemblies 212 on both sides. The garbage entering the space can only enter the recycling basket 310 under the rotating of the recycling member 330, which is beneficial to improving the recycling effect.

It is to be noted that the above shows and describes basic principles and main features of the present invention and advantages of the present invention. Those skilled in the art should understand that the present invention is not limited by the above implementations. The above implementations and the description in the specification are only used for describing the principle of the invention. On the premise of not departing from the spirit and the scope of the present invention, the present invention will also have various changes and improvements. All of these changes and improvements fail within the scope of protection of the present invention. The scope of protection required by the present invention is defined by the attached claims and their equivalents.

## Claims

1. A pool cleaning system, comprising:
a pool cleaning robot (100), configured to clean at least one of a bottom surface, wall surfaces, a water surface of a pool;
a power supply mechanism (200), electrically connected with the pool cleaning robot (100); and
a water surface cleaning mechanism (300), electrically connected with the power supply mechanism (200) and disposed on the power supply mechanism (200), wherein when the pool cleaning robot (100) is in a working state, the power supply mechanism (200) is floated on the water surface, and the water surface cleaning mechanism (300) is configured to recycle garbage floating on the water surface.

2. The pool cleaning system as claimed in claim 1, wherein the power supply mechanism (200) comprises:
a mounting rack (210), capable of floating on the water surface; and
a battery module (220), disposed in the mounting rack (210), and the mounting rack (210) being disposed in a sealing manner.

3. The pool cleaning system as claimed in claim 2, wherein the mounting rack (210) is of a shell structure, and the battery module (220) is disposed in the shell structure.

4. The pool cleaning system as claimed in claim 2, wherein the mounting rack (210) comprises:
a body (211), the battery module (220) being disposed in the body (211); and
buoyancy assembly (212), connected with the body, and the buoyancy assembly (212) being configured to adjust the buoyancy of the body (211).

5. The pool cleaning system as claimed in any one of claims 1 to 4, wherein the water surface cleaning mechanism (300) comprises:
a recycling basket (310), disposed on the power supply mechanism (200), wherein the recycling basket (310) is provided with an inlet (311); and when the pool cleaning robot (100) is in a working state, the inlet (311) is located on the water surface.

6. The pool cleaning system as claimed in claim 5, wherein in a front-rear direction, a side wall in front of the recycling basket (310) and the power supply mechanism (200) are disposed at an interval to form the inlet (311), and a side wall behind the recycling basket (310) is connected with the power supply mechanism (200); and the front-rear direction is a movement direction when the pool cleaning robot (100) works.

7. The pool cleaning system as claimed in claim 5, wherein the water surface cleaning mechanism (300) further comprises:
a driving member (320), electrically connected with the power supply mechanism (200); and
a recycling member (330), connected with an output end of the driving member (320), wherein the recycling member (330) is rotatably disposed in the inlet (311) of the recycling basket (310) along an output direction of the driving member (320); and when the driving member (320) drives the recycling member (330) to rotate, the recycling member (330) recycles the garbage on the water surface back into the recycling basket (310).

8. The pool cleaning system as claimed in claim 7, wherein when the pool cleaning robot (100) is in the working state, the recycling member (330) is at least partially located above the water surface.

9. The pool cleaning system as claimed in claim 7, wherein the power supply mechanism (200) comprises a mounting rack (210), and the mounting rack (210) comprises:
a body (211); and
a blocking plate (213), connected with the body (211) in a left-right direction, and the blocking plate (213) extending to the direction of the recycling basket (310) from the body and blocking a preset height of the recycling member (330) in front of the recycling member (330), wherein the left-right direction is a direction perpendicular to the movement direction when the pool cleaning robot (100) works.

10. The pool cleaning system as claimed in claim 9, wherein when the pool cleaning robot (100) is in the working state, one end, far away from the body (211), of the blocking plate (213) is located above the water surface.
